(19) Europäisches Patentamt
European Patent Office
Office européen des brevets

(11) Publication number: **0 230 112**
**B1**

(12) **EUROPEAN PATENT SPECIFICATION**

(45) Date of publication of patent specification: **02.05.90**

(51) Int. Cl.$^5$: **C 09 D 163/00,** C 08 G 59/40

(21) Application number: **86309297.9**

(22) Date of filing: **28.11.86**

# (54) Fluor-containing epoxy fluorocarbon coating composition and process for making the same.

(30) Priority: **23.12.85 US 812222**

(43) Date of publication of application:
**29.07.87 Bulletin 87/31**

(45) Publication of the grant of the patent:
**02.05.90 Bulletin 90/18**

(84) Designated Contracting States:
**DE FR GB**

(56) References cited:
**EP-A-0 084 771**
**WO-A-81/01149**
**DE-A-1 519 010**
**US-A-3 023 189**

**CHEMICAL ABSTRACTS, vol. 74, 1971, page 65, abstract no. 4754z, Columbus, Ohio, US; J.R. GRIFFITH et al.: "Fluoropolymers for coatings formed in situ", & AMER. CHEM. SOC., DIV. ORG. COATINGS PLAST. CHEM., PAP. 1969, 29(1), 253-6**

(73) Proprietor: **THE STANDARD OIL COMPANY**
**200 Public Square, 36-F-3454**
**Cleveland Ohio 44114 (US)**

(72) Inventor: **Smierciak, Richard Chester**
**9285 June Drive**
**Streetsboro Ohio 44240 (US)**
Inventor: **Giordano, Paul J.**
**5596 Hummelsign Drive**
**Hudson Ohio 44236 (US)**

(74) Representative: **Smith, Sydney et al**
**Elkington and Fife Beacon House 113 Kingsway**
**London WC2B 6PP (GB)**

(56) References cited:
**CHEMICAL ABSTRACTS, vol. 82, 1975, page 91, abstract no. 157869f, Columbus, Ohio, US; D.E. FIELD et al.: "Cross-linked fluoropolymer coatings", & IND. ENG. CHEM., PROD. RES. DEV. 1975, 14(1), 52-4**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 230 112 B1**

**Description**

The present invention is directed generally to fluorinated epoxy fluoropolymer compositions for use as protective surface coatings on various substrates such as metal, wood, plastic, paper and the like. This invention relates to novel 100 percent solids fluorinated epoxy fluoropolymer coating compositions. In another aspect, the invention relates to novel coating compositions and the process for producing the coating compositions which have excellent corrosion resistance and good adhesion as well as good release properties and hydrophobicity.

US—A—3,023,189 describes a solvent-free resinous composition of a perfluorochloroolefin polymer dispersed in liquid epoxide prepolymer and a cross-linking agent, which is suitable for the coating of metal surfaces, but no fluorinated cross-linking agents are disclosed. Fluorinated compositions are also generally known from, for example, DE—A—1,519,010, EP—A—0,084,771 and WO—A—8,101,149, but the crosslinkers are again not fluorinated. An epoxide prepared with fluorinated bisphenol A and hexafluoro-pentanediol is known from C.A. *74* 4754, while according to CA *82* 157869 fluorinated polyurethanes are further reacted with epichlorohydrin and cross-linked with polyamines.

There is a demand in industry for protective coatings that will withstand the effects of a variety of severe environmental conditions. Many varieties of coating compositions are currently available that are based on various polymeric materials. Coating compositions containing highly flourinated epoxy resin, generally can be made by dissolving the resins in suitable solvents and then adding to this solution suitable highly flourinated fillers. Solvent based coatings are disadvantageous in that large amounts of volatile organic solvents are present. These solvents may be costly and hazardous. The solvents must be removed and the final coatings which requires considerable thermal energy. Further, if hazardous, the solvents must be recovered or incinerated as they may not be exhausted into the environment. Water based coatings are disadvantageous in that they are not continuous and have been found to contain more pinholes and voids than the solvent based coatings.

As a result, the search for an essentially solvent-free coating process has led to the use of the solventless systems. The advantage of a solventless coating system includes the minimization of surface defects due to the absence of solvents and excellent heat and chemical resistance.

Hydrophobicity is a property needed in coatings so that they can withstand varied environmental conditions. Epoxy flurocarbon coatings are limited in their hydrophobic properties by the level of fluorocarbon that can be dispersed in the coating composition. The fluorine content can be increased by employing fluorine in the epoxy matrix network of an epoxy fluorocarbon polymer of the instant invention thereby increasing the hydrophobicity of the coating composition.

It is an object of this invention to provide a fluorinated epoxy fluoropolymer coating composition in a 100 percent solids, solvent free system to avoid use of cyclable solvents. It is another object of this invention to employ fluorine in the epoxy matrix network of the epoxy fluorocarbon polymer resulting in an improved hydrophobic coating composition. It is another object of this invention to produce a coating composition that exhibits excellent adhesion and wetting to the substrate, good flexibility, hydrophobicity and excellent corrosion resistance.

It has now been found that a dispersion system of a fluorocarbon polymer, an expoxy resin and a fluorinated curing agent results in a multifunctional coating comprised of a fluorinated epoxy resin network with improved properties. The present invention includes a solventless coating system based on the multifunctional epoxy resin which serves as a reactant with and a solvent for the fluorocarbon polymer. The present invention produces a fluorinated epoxy fluorocarbon polymer by the reaction of a fluorinated curing agent with an epoxy resin and fluorocarbon polymer which results in crosslinking of the epoxy resin and the addition of fluorine in the epoxy resin network by the fluorinated curing agent. The epoxy resin is crosslinked to form a highly fluorinated epoxy resin.

The present invention provides a substantially solvent-free epoxy fluorocarbon coating composition characterised in that it comprises from 5 to 24 percent of a fluorocarbon polymer dispersed in from 25 to 85 percent of an epoxy resin and from 10 to 70 percent of a fluorinated curing agent. In other words, this invention relates to coating compositions comprising polymerized fluorinated epoxy resin, fluorocarbon polymer, in particular polytetrafluoroethylene (PTFE), wherein the weight percent of the fluorocarbon polymer is from 5 to 24 percent of the total weight of the coating composition and a fluorinated curing agent.

The invention further includes a process to produce such coating compositions comprising:

1) forming a dispersion of fluorocarbon polymer in an epoxy resin
2) adding a fluorinated curing agent to the dispersion to form a mixture,
3) applying the mixture to a substrate to form a coating, and
4) curing the coating so that the epoxy resin crosslinks with the fluorinated curing agent resulting in a polymerized fluorinated epoxy fluorocarbon coating.

The fluorinated epoxy fluorocarbon polymer coating compositions of this invention can be used for industrial corrosion protection of substrates where coating properties such as hydrophobicity, good release properties, adhesion and corrosion resistance are important. Major uses for the coatings are in the chemical procesing industry for reactors, stirrers, pipes and tankers. Further, the coating compositions may also be used in other fields such as anti-biofouling, anti-icing, electrical insulation and the like.

Detailed Description of the Invention

The coating composition of the instant invention comprises a dispersion of a fluorocarbon polymer in an epoxy resin which is cured by a fluorinated curing agent resulting in a flourinated epoxy fluorocarbon polymer.

The coating compositions of the present invention contain an epoxy resin. Epoxy resins are characterised by the presence of a three-membered cyclic ether group commonly referred to as an epoxy group which is represented as follows:

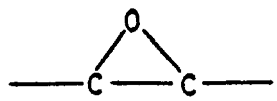

There are two distinct classes of epoxy resins, diglycidyl ethers of bisphenol A and Novolak Epoxy resins. Molecular weight and epoxide equivalent are controlled by varying the reactant ratios. The epoxy resin functions are a dispersing resinous vehicle and matrix for the fluorocarbon polymer. The coating compositions of the present invention are classified as 100 percent solids because they contain essentially no volatile solvents. The fluorocarbon polymer is uniformly dispersed in the epoxy resin resulting in a network of fluoropolymer which is homogeneously dispersed throughout the expoxy matrix. However, minor amounts of solvents may optionally be used which may be volatile, which does not defeat the object of this invention, to provide a substantially 100 percent solid coating compositions.

These epoxy resins can be employed either alone or in combination. The coatings compositions contain, in percent of the total weight, from 25 to 85 percent, preferably from 30 to 75 percent of the epoxy resin.

The conventional epoxy resins are diglycidyl ethers of bisphenol A derived from bisphenol A ($4,4^1$-isopropylidenediphenol) and epichlorohydrin. The reaction product is believed to have the form of a polyglycidyl ether of bisphenol A (the glycidyl group being more formally referred to as the 2,3-epoxypropyl group) and thus may be thought of as a polyether derived from the diphenol and glycidol (2,3-epoxy-1-propanol).

The structure usually assigned to the resinous product is (II):

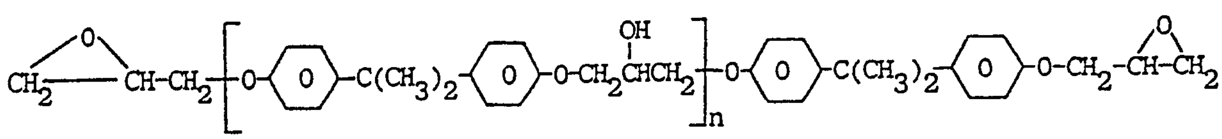

A viscous liquid epoxy resin, average molecular weight about 380, is obtained by reacting the epichlorohydrin in high molecular proportion relative to the bisphenol A, the reaction product containing well over 85 mole percent of the monomeric diglycidyl ether of bisphenol A (represented in formula II, where n = less than one), which may be named 2,2-bis(p-(2,3-epoxypropoxy)pehny)propane, and smaller proportions of polymers in which n is an integer equal to 1, 2, 3, etc. This product exemplifies epoxide monomers and prepolymers, having a moderate molecular weight, preferably of the order of 1,000 or less, which may be cross-linked or otherwise polymerized in accordance with the invention. Solid diglycidyl ethers of bisphenol A are also useful epoxy resins for the instant invention. The structure is the same structure as above, in formula II, except the average value of n ranges from 1 to 20. High molecular weight diglycidyl ethers of bisphenol A are also useful for the instant invention. The molecular weight of the product is a function of the ratio of epichlorohydrin-bisphenol A. The average value of n ranges from 1 to 20 and as the n value becomes greater the molecular weight of the resin increases.

The Novolak Epoxy resins are obtained by the known reaction of epichlorohydrin with a novolak resin. First, a phenol-formaldehyde type resin is obtained primarily by the use of acid catalysts and an excess phenol. The Epoxy Phenol-Novolak Resins are then prepared from the phenol-formaldehyde condensation products with subsequent epoxidation utilizing epichlorohydrin. The structure usually assigned this resinous structure is

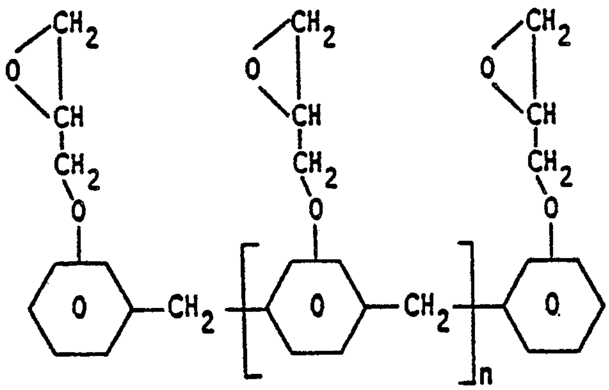

(III)

The Epoxy Novola resin can range from a high viscosity liquid, (an example of which is formula III, where n averages about 0.2) to a solid, (where the value of n in formula III is greater than 3).

Many other epoxide materials are available in polymerizeable monomeric or prepolymeric forms. Typical expoxide or polyepoxide materials include but are not limited to cyclohexene oxides, epoxidized cycloalkenes, glycidyl esters of acrylic acid, glycidyl alkyl ethers, glycidyl aryl ethers, esters of epoxidized cyclic alcohols, esters of epoxidized cycloalkanecarboxylic acids, halogenated epoxides, styrene oxide, bisphenol F epoxides, and others.

The cyclohexene oxides and their derivatives and homologues useful as epoxide materials include but are not limited to cyclohexene oxide, 1,2-epoxycyclohexane, vinylcyclohexene dioxide, more specifically named 3-(epoxyethyl)-7-oxabicyclo (4.1.0) heptane, and 1,2-epoxy-4-(epoxyethyl)cyclohexane. Most preferred is cyclohexene oxide.

The epoxidized cycloalkenes and their derivatives and homologues useful as epoxide materials include but are not limited to the derivatives of ethylene oxide, propylene oxide, trimethylene oxide, 3,3-bis(chloromethyl)-oxetane, tetrahydrofuran, dicyclopentadiene dioxide, 1,3,5-trioxane as well as 2,3 epoxybutane, polycyclic diepoxide and 3,4,-8,9-diepoxy tricyclo-[5.2.1.$0^{2,4}$]-decane. Most preferred is polycyclic diepoxide.

The glycidyl esters of acrylic acid and their derivatives and homologues include but are not limited to the glycidyl derivatives of methacrylic acid, acrylonitrile, crotonic acid, as well as allylglycidyl ether, 1,-allyloxyl-2,3-epoxypropane, glycidyl phenyl ether, and 1,2-epoxy-3-phenoxypropane. Most preferred are epoxidized methacrylic acid and acrylonitrile. However, coating compositions must be prepared with at least one non-epoxy-nitrile monomer.

The glycidyl alkylethers and their derivations and homologues include but are not limited to glycidyl octy ether, dicyl glycidyl ether, dodecyl glycidyl ether and glycidyl tetradecyl ether. Most preferred is epoxidized glycidyl octy ether.

The glycidyl aryl ethers and their derivatives and homologues include but are not limited to benzyl glycidyl ether, methyl benzyl glycidyl ether, dimethyl benzyl glycidyl ether, ether glycidyl ether. Most preferred is benzyl glycidyl ether.

Esters of epoxidized cyclic alcohols or of epoxidized cycloalkanecarboxylic acids or of both and their derivatives and homologues include but are not limited to esters of epoxidized cyclohexanemethanol and epoxidized cyclohexane-carboxylic acid such as diepoxide (3,4-epoxy-cyclohexyl) methyl 3,4-epoxycyclohexane-carboxylate, esters of a substituted (epoxycycloalkyl) methanol and a dibasic acid such as bis (3,4-epoxy-6-methylcyclohexyl)-methyl) adipate. Diepoxide monomeric materials may be obtained conveniently as bis(epoxyalkyl) ethers of glycols, an example being the diglycidy) ether of 1,4-butanediol, that is 1,4-bis-(2,3-epoxypropoxy)butane. This diepoxide is related to the diglycidyl ether of bisphenol A, that is 2,2-bis-[p-(2,3-epoxypropoxy)-phenyl] propane.

Reactive diluents may be used such as 1,2 epoxy dodecane and the like.

The second component of the coating compositions of the present invention is a fluorocarbon polymer. The fluorocarbon polymers used are those of hydrocarbon monomers that are perfluorinated. the fluorocarbon polymers used as initially in powder, granular or micropowdered form.

These fluorocarbon polymers can be employed in the coating composition either alone or in combination. The coating compositions contain, in percent of total weight, from 5 to 24 percent, preferably from 10 to 20 percent of powdered fluorocarbon polymers.

Typical fluorocarbon polymers include but are not limited to homologues and derivatives of polytetrafluoroethylene Teflon® FEP — a fluorinated ethylene propylene which is a copolymer of tetrafluoroethylene and hexafluoropropylene, Teflon® ETFE-tetrafluoroethylene, Teflon® PFA-perfluoroalkyoxy resin, Tefzel®-modified copolymer of ethylene and tetrafluoroethylene and the like. Most preferred is polytetrafluoroethylene.

The third component of the coating compositions of the instant invention is a fluorinated curing agent. The fluorinated curing agents are stoichiometric curing agents for the expoxy resin. The fluorinated curing

agent effects crosslinking of the epoxy resin and the fluorinated curing agent resulting in a fluorinated epoxy resin. The use of the fluorinated curing agent component in the coating composition physically integrates the fluorine in the epoxy resin network as a crosslinker, and increases the weight percent of fluorine in the coating composition.

The fluorinated curing agents can be employed either alone or in combination. The coating compositions contain, in percent of total weight from 10 to 70 percent, preferably from 20 to 60 percent, and most preferably from 30 to 50 percent, of fluorinated curing agent.

The fluorinated curing agents of this invention are stoichiometric curing agents for the epoxy resin which have low volatility such that it remains in the coating to effect a cure and is reactivated at low temperatures of 150°C and less.

The fluorinated curing agents of the instant invention include the fluorinated alcohols, fluorinated amines, fluorinated anhydrides, fluorinated diols, fluorinated phenols and the like. Typical fluorinated curing agents include but are not limited to homologues and derivatives of 4-aminobenzotrifluoride, 4,4'-diaminooctafluorobiphenyl, 3-5-Bis(trifluoromethyl)analine, 2,2,3,3,4,4-hexafluoro-1,5-pentanediol, decafluoropropionic anhydride, heptafluorobutyric anhydride, 4,4'-(hexafluoroisopropylidene)diphenol, tetrafluororesorcinol, 4,4'-dihydroxyoctafluoro biphenyl and the like. Preferred are 4,4'-diaminooctafluorobiphenyl, 4-aminobenzotrifluoride, 3,5-Bis(trifluoromethyl)analine,2,2,3,3,4,4-hexafluoro-1,5-pentanediol, 4,4'-(hexafluoroisoproylidene)diphenol and tetrafluororesorcinol. Most preferred is 4,4'-(hexafluoroisopropylidene)diphenol and tetrafluororesorcinol.

The coating composition of the instant invention is cured at 80 to 150°C, preferably 90 to 100°C, generally for 15 minutes to 12 hours preferably from ½ to 6 hours, and most preferably from 1 to 2 hours.

The fluorinated curing agents may be employed in conjunction with an accelerator contained in the composition that is compatible with the fluorinated curing agent and the coating composition. Accelerators generally reduce the time required for polymerization of the coating composition so that the pot life, cure temperature and cure time can be controlled and at the same time improve the aging and other physical properties of the coating composition. The accelerations and the use thereof are generally well known in the art. Exemplary accelerators are Lewis bases, in particular, aliphatic and aromatic tertiary amines such as N,N-dimethyl benzylamine, triethanol amine tris(dimethylaminomethyl)phenol, dimethylaminomethyl phenol and the like.

It will be readily apparent to those skilled in the art that the coating compositions of the instant invention may be further modified by the optional addition of plasticizers, stabilizers, pigments, dispersants, defoamers, surfactants, extenders, fillers, reinforcing agents and other film formers. The coating compositions of the instant invention may also optionally contain various flattening agents, surface active agents, thixotropic agents, UV light absorbers, flow control agents, viscosity agents, antioxidant agents and dyes. All these additives and the use thereof are well known in the art and do not require extensive discussion, it being understood that any compound possessing the ability to function in such a manner, UV light absorber and the like, can be used so long as they do not deleteriously affect the curing of the coating composition and do not adversely affect the characteristics of the coating. It will be appreciated, therefore that the epoxy resins, fluorocarbon polymers, fluorinated curing agents and any other modifiers should be chemically compatible with each other.

In the practice of this invention, the coating composition precursor is first compounded by adding together the epoxy resins and the fluorocarbon polymers to form generally a uniform dispersion. To this dispersion is added the fluorinated curing agent, with stirring to form a mixture. Optionally, at any step in the process prior to the cure, any of the aforementioned additives may be stirred into the mixture. The various components are thoroughly mixed so as to form a uniform dispersion mixture of the coating composition's components.

A relatively uniform film of coating mixture is applied onto a substrate by any of the known means such as wire wound rod, Guargco® wet film applicator rods, knife, bar, airless spraying, dipping, roller coating, flowing, brushing, conventional and/or electrostatic spray gun, electrodeposition and the like. The various substrates employed can be wood, paper, metal, pretreated metal, plastic and the like. Generally, the coating composition is applied in an amount sufficient to provide a dry cured coating thickness of from 1 to 100 mil (from 0.00254 to 0.254 cms), preferably from 10 to 70 mil (from 0.0254 to 0.1778 cms) and most preferably from 20 to 50 mil (from 0.0508 to 0.127 cms). Optionally, multiple coats of the composition may be applied to the substrate. By selection of components and additives by coating compositions may be applied both as translucent coatings or opaque coatings.

The coating mixture is then cured and solidified to form the coating composition. The coating composition is cured at a temperature from 80 to 150°C, preferably 90 to 100°C, for 15 minutes to 12 hours, preferably from ½ to 6 hours, and most preferably from 1 to 2 hours.

After cure, there is present on the surface of the substrate a hard, non-tacky, hydrophobic, adherent and chemically resistant coating which tenaciously adheres to the substrate.

The coating compositions of the present invention are fluorinated epoxy fluorocarbon polymers which are produced by dispersing fluorocarbon polymers in an epoxy resin and curing the mixture with a fluorinated curing agent. The fluorinated curing agent puts fluorine into the epoxy resin thus the fluorine becomes an integral part of the epoxy resin network as a crosslinker. It is theorized that this allows for increased homogeneity, wetting and compatibility of the fluorocarbon which is physically situated in the

epoxy matrix. Further, employing fluorinated curing agents as a component of the coating composition increases the fluorine content in the composition resulting in improved hydrophobicity, flexibility and plasticity. The coatings' superior properties are derived not only from the ability of the fluorinated curing agent to crosslink and graft with the epoxy resin but also from the dispersion of fluorocarbon polymer in the epoxy resin matrix.

The fluorinated epoxy fluorocarbon polymer coating compositions of the present invention exhibits excellent adhesion and wetting to metallic substrates, improved flexibility and good hydrophobicity and excellent corrosion resistance.

Specific Embodiment

57.0 g of Shell Epon® 828 liquid epoxy resin (available from Shell Oil Co., Chicago, Illinois, commercial grade) and 0.3 g of 3M fluorad® FC-430 fluorosurfactant (available from 3M Co., St Paul, Minnesota, commerical grade) was charged into a 250 ml beaker and rapidly dispersed using a cowles blade. 31.7 g of 2,2,3,3,4,4-hexafluoropentane-1,5-diol was added with rapid dispersing. The mixture was continuously stirred for 15 minutes. 10 g of DLX-6000 micropowdered polytetrafluorethylene (available from E. I. DuPont de Nemours and Co., Wilmington, Delaware) was added to the mixture with continuous mixing for 15 minutes to 30 minutes. 1 weight percent of N,N-dimethyl benzylamine was added to the dispersion by stirring.

The dispersion was then applied to the surface of 4″ × 6″ × 3/16″ (10.16 cms × 15.24 cms × 0.47625 cms) test panels of bare cold rolled steel with no conversion coating, that had been blast cleaned to a white metal Nace 1 finish.

The test panels were preheated to about 90°C and the coating was applied to the warm test panel. The test panel was then cured at 90 to 125°C for 30 minutes and then about 125°C was maintained for another 30 minutes and then the temperature was gradually reduced to about 90°C for the last 30 minutes. This cycle was repeated between each coat. Four coats were applied. After the last coat the test panels were post cured at about 150°C for about 6 hours. The coatings were about 7 mil (0.01778 cms) thick.

88.6 g of Shell Epon® 828 liquid epoxy resin was mixed with 11.4 g of triethylene tetraamine to form a comparative standard epoxy coating composition mixture. The resulting mixture was stirred to form generally a homogeneous mixture of comparative composition. The comparative composition was applied to the surface of 4″ × 6″ × 0.032″ (10.16 cms × 15.24 cms × 0.08128 cms) cold rolled steel untreated matte finish test panels. The coated panels were then cured at about 80°C for 15 minutes. This cycle was repeated between each coat. Five coats were applied. After the last coat, the test panels were post cured at 100°C for about 4 hours. The coatings were about 10 mil (0.0254 cms) thick.

The coated test panels were tested in a test cell in which the test panels was horizontally attached to each end of the test cell consisting of a vertically oriented glass cylinder with a reflux condenser which can be capped at both ends by means of the test panel of about 4″ (10.16 cms) outside diameter Teflon® washers. The cylinder was about three-quarters filled with HCl solution and then heat was applied by means of a heating tape or "girdle" around the outside of the test cell. In this way, about a 3 inch (7.62 cms) circle of the top part of the coated test panel was exposed to a continously condensing vapor phase of the test solution and about a 3 inch (7.62 cms) circle of the bottom part of the coated test panel was immersed in the refluxing test solution.

Duplicate test panels were subjected to the impact (ASTM D 2794-82) test which measures the tendency for a coating to crack after being deformed by an impacting force. A falling stainless steel ball weight hits a panel with the coated side down for the reverse impact test. The height of the fall in inches multiplied by the dropping weight in pounds is the impact energy. To pass the test, a standard tape is applied to the impacted area and snapped off and the coating must remain intact. Test ranges are from 0 to 160 inch-pounds (in-lb), (from 0 to 18.08J), with 160 meaning there is no loss of coating after the tape is snapped off and 0 meaning a failure.

The contact angle test measures the hydrophobicity of the coating. A droplet of pure water (18M) is placed on the coated test panel. Using a microscope and a camera the angle between the water droplet and the coated substrate is measured. The contact angle measured is the angle between a tangent line on the side of the droplet and the substrate. The higher the contact angle, the greater the hydrophobicity and the lesser the wetting.

The test panel in the corrosion control test showed no corrosion on the vapor and immersed panel after 100 hours. After 120 hours the vapor test panel composition of the instant invention showed 100 percent delamination with 100 percent corrosion present. The immersion test panel composition of the instant invention showed less than 50 percent corrosion products and 20 to 25 percent delmamination after 120 hours. The comparative epoxy coating vapor test panel showed 100 percent corrosion and 100 percent delamination after 80 hours. The comparative epoxy coating immersion test panel showed no corrosion and no delamination after 80 hours.

The corrosion control test results demonstrate that there is no significant difference between the comparative coating and the novel coating of the instant invention in the immersion test. However, in a vapor phase environment, which is a more severe test due to increased activity and permeability of gases the coating of the instant invention had no corrosion at 100 hours whereas the comparative coating failed

at 80 hours. Thus, the novel coating composition of the instant invention shows enhanced results over the comparative coating composition.

The test panels for the reverse impact test was a 160 lb-in (18.08J) meaning the coating remained intact. In contrast, the comparative test panel for the reverse impact test was 10 lb-in (1.13J). Accordingly, the coating composition of the instant invention demonstrates superior reverse impact strength compared to a standard epoxy coating composition.

The test panel coated with the composition of the instant invention measured a 88° contact angle, whereas, the comparative test panel had a 75° contact. Accordingly, the coating composition of the instant invention has greater hydrophobicity and lesser wetting than a comparative epoxy coating composition.

**Claims**

1. A substantially solvent-free epoxy fluorocarbon coating composition characterised in that it comprises from 5 to 24 percent of a fluorocarbon polymer dispersed in from 25 to 85 percent of an epoxy resin and from 10 to 70 percent of a fluorinated curing agent.

2. A coating composition as claimed in claim 1 characterised in that the epoxy resin is selected from diglycidyl ethers of bisphenol A, diglycidyl ethers of novolak epoxy resin, cyclohexane oxides, epoxidized cycloalkenes, glycidyl esters of acrylic acid, glycidyl alkyl ethers, glycidyl aryl ethers, esters of epoxidized cyclic alcohols, esters of epoxidized cycloalkane-carboxylic acids, 1,2-epoxy dodecane and combinations thereof.

3. A coating composition as claimed in claim 1 or claim 2 characterised in that it comprises from 30 to 75 percent of epoxy resin.

4. A coating composition as claimed in any of claims 1 to 3 characterised in that the fluorocarbon polymer is selected from polytetrafluoroethylene, fluorinated ethylene propylene, tetrafluoroethylene, perfluoroalkyoxy resin and combinations thereof.

5. A coating composition as claimed in claim 4 characterised in that the fluorocarbon polymer is polytetrafluoroethylene.

6. A coating composition as claimed in any of claims 1 to 5 characterised in that it comprises from 10 to 20 percent of fluorocarbon polymer.

7. A coating composition as claimed in any of claims 1 to 6 characterised in that it comprises from 20 to 60 percent of fluorinated curing agent.

8. A coating composition as claimed in any of claims 1 to 7 characterised in that the fluorinated curing agent is selected from fluorinated alcohols, fluorinated amines, fluorinated anhydrides, fluorinated diols, fluorinated phenols and mixtures thereof.

9. A coating composition as claimed in claim 8 characterised in that the fluorinated curing agent is selected from 4,4'-(hexafluoroisopropylidene)-diphenol, tetrafluororesorcinol and mixtures thereof.

10. A coating composition as claimed in any of claims 1 to 9 characterised in that it comprises an accelerator for the fluorinated curing agent which is selected from N,N-dimethyl benzylamine, triethanolamine, tri(dimethylaminomethyl) phenol, dimethylaminomethyl phenol and mixtures thereof.

11. A process for preparing a fluorinated epoxy fluorocarbon coating composition characterised in that it comprises:

(a) forming a dispersion of a fluorocarbon polymer in an epoxy resin;
(b) adding a fluorinated curing agent to the dispersion to form a mixture;
(c) applying the mixture to a substrate to form a coating; and
(d) curing the coating such that the epoxy resin crosslinks with the flourinated curing agent.

12. A coating composition as claimed in claim 11 characterised in that the coating composition is cured at 80 to 150°C.

13. A coating composition as claimed claim 11 or claim 12 characterised in that the fluorocarbon polymer is polytetrafluoroethylene.

14. A coating composition as claimed in any of claims 11 to 13 characterised in that the epoxy resin is selected from diglycidyl ethers of bisphenol A, diglycidyl ethers of novolak epoxy resin and combinations thereof.

**Patentansprüche**

1. Im wesentlichen lösungsmittelfreie Epoxy-Fluorkohlenstoff-Beschichtungszusammensetzung, dadurch gekennzeichnet, daß sie 5 bis 24 Prozent eines Fluorkohlenstoffpolymeren, dispergiert in 25 bis 85 Prozent eines Epoxyharzes und 10 bis 70 Prozent eines fluorierten Härtungsmittel enthält.

2. Beschichtungszusammensetzung nach Anspruch 1, dadurch gekennzeichnet, daß das Epoxyharz ausgewählt ist aus Diglycidylethern von Bisphenol A, Diglycidylethern von Novolak-epoxyharz, Cyclohexenoxiden, epoxidierten Cycloalkenen, Glycidylestern von Acrylsäure, Glycidylalkylethern, Glycidylarylethern, Estern von epoxidierten cyclischen Alkoholen, Estern von epoxidierten Cycloalkancarbonsäuren, 1,2-Epoxydodecan und Kombination davon.

3. Beschichtungszusammensetzung nach Anspruch 1 oder Anspruch 2, dadurch gekennzeichnet, daß sie 30 bis 75 Prozent Epoxyharz umfaßt.

4. Beschichtungszusammensetzung nach einem der Ansprüche 1 bis 3, dadurch gekennzeichnet, daß das Fluorkohlenstoffpolymer ausgewählt ist aus Polytetrafluorethylen, fluoriertem Ethylen-propylen, Tetrafluorethylen, Perfluoralkoxyharz und Kombination davon.

5. Beschichtungszusammensetzung nach Anspruch 4, dadurch gekennzeichnet, daß das Fluorkohlenstoffpolymere Polytetrafluorethylen ist.

6. Beschichtungszusammensetzung nach einem der Ansprüche 1 bis 5, dadurch gekennzeichnet, daß sie 10 bis 20 Prozent Fluorkohlenstoffpolymeres umfaßt.

7. Beschichtungszusammensetzung nach einem der Ansprüche 1 bis 6, dadurch gekennzeichnet, daß sie 20 bis 60 Prozent fluoriertes Härtungsmittel umfaßt.

8. Beschichtungszusammensetzung nach einem der Ansprüche 1 bis 7, dadurch gekennzeichnet, daß das fluorine Härtungsmittel ausgewählt ist aus fluorierten Alkoholen, fluorierten Aminen, fluorierten Anhydriden, fluorierten Diolen, fluorierten Phenolen und Gemischen davon.

9. Beschichtungszusammensetzung nach Anspruch 8, dadurch gekennzeichnet, daß fluorierte Härtungsmittel ausgwählt ist aus 4,4'-(Hexafluorisopropyliden)-diphenol, Tetrafluorresorcin und Gemischen davon.

10. Beschichtungszusammensetzung nach Anspruch 1 bis 9, dadurch gekennzeichnet, daß sie einen Beschleuniger für das fluorierte Härtungsmittel umfaßt, der ausgewählt ist aus N,N-Dimethylbenzylamin, Triethanolamin, Tris(dimethylaminomethyl)phenol, Dimethylaminomethylphenol und Gemischen davon.

11. Verfahren zur Herstellung einer fluorierten Epoxy-Fluorkohlenstoff-Beschichtungszusammensetzung, dadurch gekennzeichnet, daß es umfaßt:

(a) Die Bildung einer Dispersion aus einem Fluorkohlenstoffpolymeren in einem Epoxyharz;

(b) den Zusatz eins fluorierten Härtungsmittels zu der Dispersion unter Bildung eines Gemischs;

(c) den Auftrag des Gemischs auf ein Substrat zur Bildung einer Beschichtung; und

(d) die Härtung der Beschichtung derart, daß das Epoxyharz mit dem fluorierten Härtungsmittel vernetzt.

12. Verfahren nach Anspruch 11, dadurch gekennzeichnet, daß die Beschichtungszusammensetzung bei 80 bis 150°C gehärtet wird.

13. Verfahren nach Anspruch 11 oder 12, dadurch gekennzeichnet, daß das Fluorkohlenstoffpolymere Polytetrafluorethylen ist.

14. Verfahren nach einem der Ansprüche 11 bis 13, dadurch gekennzeichnet, daß das Epoxyharz ausgewählt wird aus Diglycidylethern von Bisphenol A, Diglycidylethern von Novolak-epoxyharz und Kombinationen davon.

**Revendications**

1. Composition de revêtement fluorocarboné à matrice époxy, substantiellement sans solvent, caratérisée en ce qu'elle comporte de 5 à 24 pour-cent d'un polymère fluorocarboné dispersé dans 25 à 85 pour-cent d'une résine époxy et dans 10 à 70 pour-cent d'un agent fluoré de réticulation.

2. Composition de revêtement selon la revendication 1, caractérisée en ce que l'on choisit la résine époxy parmi les éthers diglycidyliques du bisphénol A, les éthers diglycidyliques de la résine époxy Novolak, les oxydes de cyclohexène, les cycloalcènes époxydés, les esters glycidyliques de l'acide acrylique, les éthers de glycidylalkyle, les éthers de glycidylaryle, les esters des alcohols cycliques époxdés, les esters des acides cycloalcanecarboxyliques époxydés, le 1,2-époxydodécane et leurs combinaisons.

3. Composition de revêtement selon la revendication 1 ou la revendication 2, caractérisée en ce qu'elle comporte de 30 à 75 pour-cent de résiné époxy.

4. Composition de revêtement selon l'une des revendications 1 à 3, caractérisée en ce que l'on choisit le polymère fluorcarboné parmi le polytétrafluoroéthylène, l'éthylènepropylène fluoré, le tétratfluoroéthylène, la résine perfluoroalcoxy et leurs combinaisons.

5. Composition de revêtement selon la revendication 4, caractérisée en ce que le polymère fluorcarboné est le polytétrafluoréthylène.

6. Composition de revêtement selon l'une des revendications 1 à 5, caractérisée en ce qu'elle comporte de 10 à 20 pour-cent de polymère fluorocarboné.

7. Composition de revêtement selon l'une des revendications 1 à 6, caractérisée en ce qu'elle comporte de 20 à 60 pour-cent de l'agent fluoré de réticulation.

8. Composition de revêtement selon l'une des revendications 1 à 7, caractérisée en ce que l'on choisit l'agent fluoré de réticulation parmi les alcohols fluorés, les amines fluorées, les anhydrides flourés, les diols flourés, les phénols flourés et leurs mélanges.

9. Composition de revêtement selon la revendication 8, caractérisée en ce que l'on choisit l'agent flouré de réticulation parmi le 4,4'(hexafluoroisopropylidène)-diphénol, le tétrafluororésorcinol et leurs mélanges.

10. Composition de revêtement selon l'une des revendications 1 à 9, caractérisée en ce qu'elle comporte, pour l'agent fluoré de réticulation, un accélérateur que l'on choisit parmi la N,N-diméthylbenzylamine, la triéthanolamine, le tris(diméthylaminométhyl)phénol, le diméthylaminométhylphénol et leurs mélanges.

11. Procédé de préparation d'un composition de revêtement à base de fluorocarbone à matrice époxy flourée, caractérisé en ce qu'il comporte:

a) former une dispersion d'un polymère fluorocarboné dans une résine époxy,

b) ajouter un agent flouré de réticulation à la dispersion pour former un mélange,

c) appliquer le mélange sur un substrat pour former un revêtement, et

d) faire durcir le revêtement de façon que la résine époxy subisse une réticulation sous l'action de l'agent flouré de réticulation.

12. Procédé selon la revendication 11, caractérisé en ce que l'on fait durcir la composition du revêtement à une témperature de 80 à 150°C.

13. Procédé selon la revendication 11 ou 12, caractérisé en ce que le polymère fluorocarboné est le polytetrafluoroéthylène.

14. Procédé selon l'une des revendications 11 à 13, caractérisé en ce que l'on choisit la résine époxy parmi les éthers diglycidyliques du bisphénol A, les éthers diglycidyliques de résine époxy Novolak et leurs combinaisons.